# EUROPEAN PATENT APPLICATION

(11) **EP 2 602 764 A1**
(43) Date of publication of application: **12.06.2013**
(21) Application number: 12195574.4
(22) Date of filing: 05.12.2012
(51) Int. Cl.: G06T 11/60

(54) **Differentiating between editable and uneditable guides**

(30) Priority: 05.12.2011 US 201113310801
(71) Applicant: Microsoft Corporation, Redmond, WA 98052 (US)
(72) Inventor: Maloney, Christopher M., Redmond, WA 98052 (US); Altin, Daniel J., Redmond, WA 98052 (US)
(74) Representative: Grünecker, Kinkeldey, Stockmair & Schwanhäusser

(57) **Abstract**

A plurality of different views are provided for a given pane. Drawing guides corresponding to a current view can be edited while those corresponding to other views cannot.

## Description

### BACKGROUND

Many different types of computer-implemented drawing programs are currently in use. Many such programs provide user interface displays that allow a user to perform graphic design or other sophisticated drawing operations. Such programs enable computer graphic design, computer aided design, computerized drawing, and even photo editing

In performing computerized drawing, users often attempt to align objects on a drawing surface. For instance, where a user has drawn a picture or a geometric shape or other object, or otherwise imported an object, the user may wish to align the objects in a vertical or horizontal way, or in another way. Many current computer drawing applications provide assistance to users when they are attempting to align objects.

Some of the mechanisms used to assist the user are referred to as drawing guides. In some cases, the user places a drawing guide at a certain location and then aligns a number of objects to that guide. In other cases, rather than the end user, a designer places the guide and the end user aligns objects to the designers pre-existing guide. In either case, it is generally quite easy to accidently move the guide when attempting to move the object on the drawing surface into alignment with the guide. Once the guide has been accidently moved, it can be difficult to correct.

Some current drawing programs address this problem by allowing the user to lock a guide in place. This has been done by requiring the user to unlock the guide, place the guide at a certain location, and then lock the guide. Each of these steps requires the user to interact with some type of user interface element which may either be located on the tool bar or somewhere else proximate the drawing surface, or by right clicking on a portion of the user interface display and then choosing a "lock" option from a dropdown menu or from some other type of selectable list. Requiring these types of operations can be quite cumbersome and time consuming in the drawing process.

The discussion above is merely provided for general background information and is not intended to be used as an aid in determining the scope of the claimed subject matter.

### SUMMARY

Some types of drawing software arrange drawing surface panes or canvases (such as slides) in a pre-existing hierarchy. That is, the canvas (or drawing panes or slides of the software) conform to an inheritance model that has an inheritance hierarchy. Every new canvas that the user interacts with begins as a child of a master layout canvas. When an object is added to a master layout canvas, the child pane that inherits from that master layout canvas has the object included in the master layout canvas. In some instances, the object added at the master level is not editable at the user level unless the child moves into a master level view.

Similarly, a drawing program allows designers to add guides on a master level which inhibits the end user from accidently moving the guide at the child level. In one embodiment, the user can also set guides at the child level, which are editable because they are added on the child level canvas and not on the master level canvas.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a block diagram of one illustrative computing device.

FIG. 2A is one exemplary screenshot.

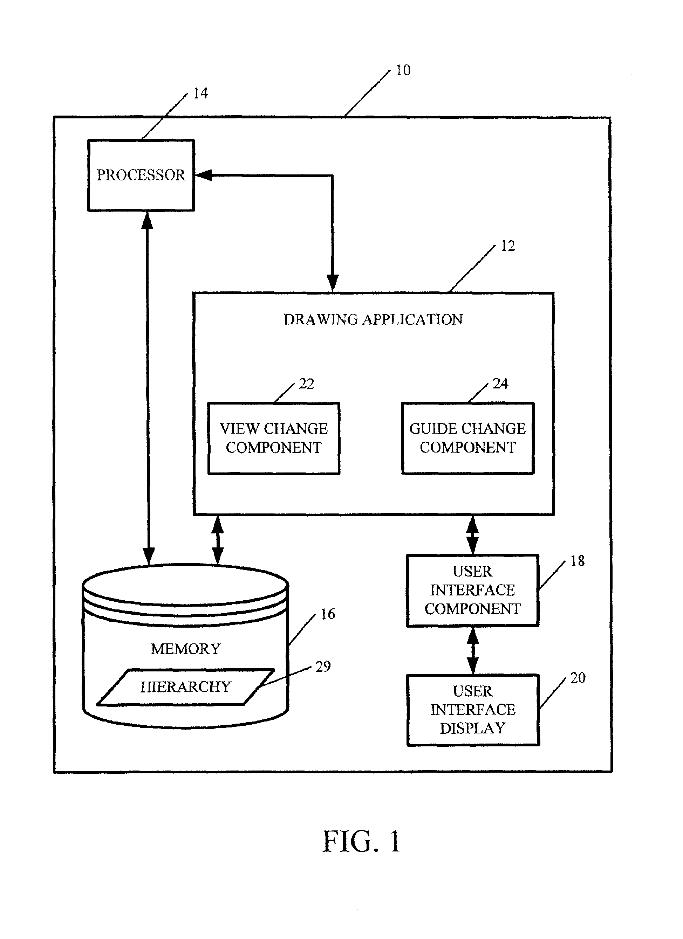

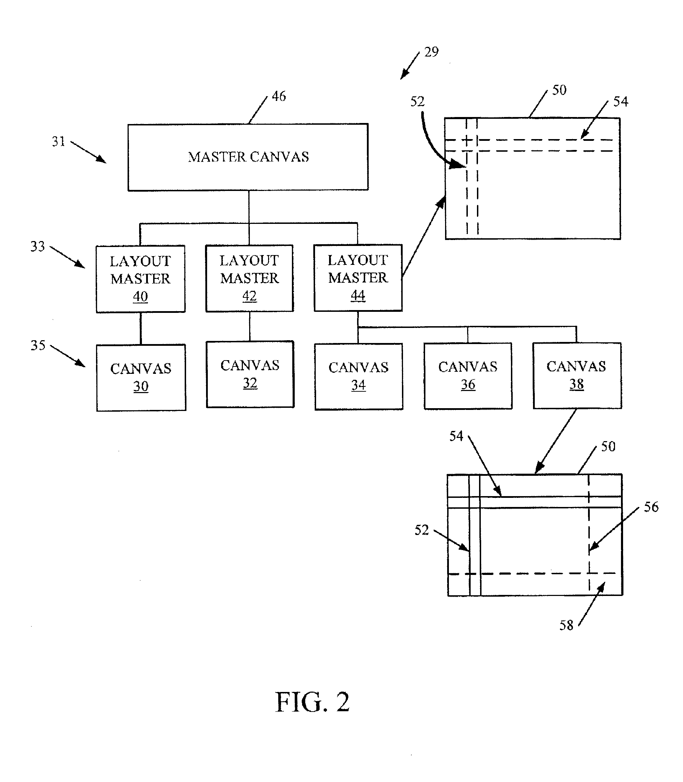

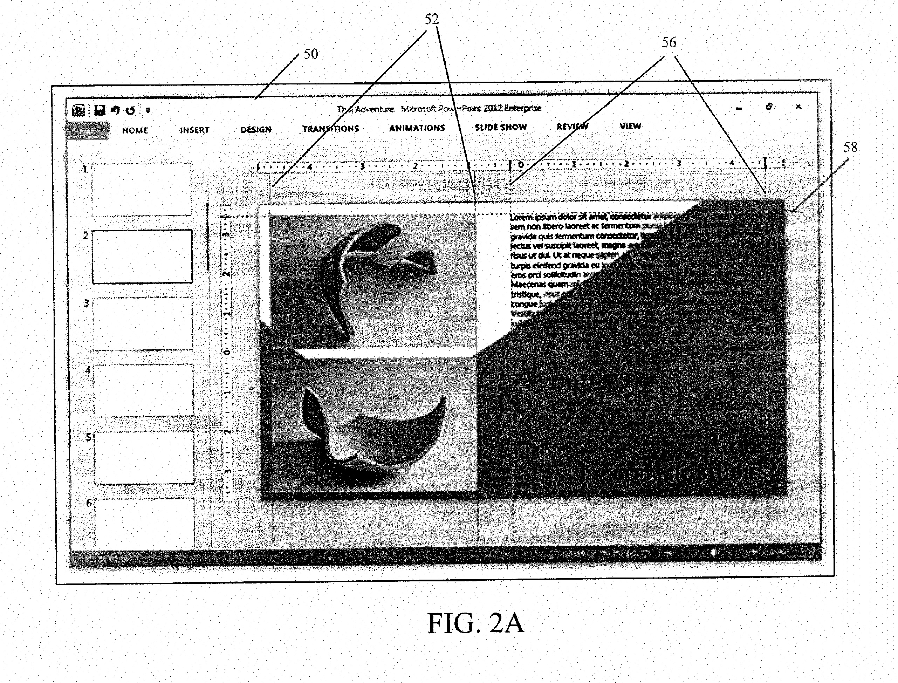

FIG. 2 is a flow diagram illustrating one embodiment of the operation of the device shown in FIG. 1 in changing guides.

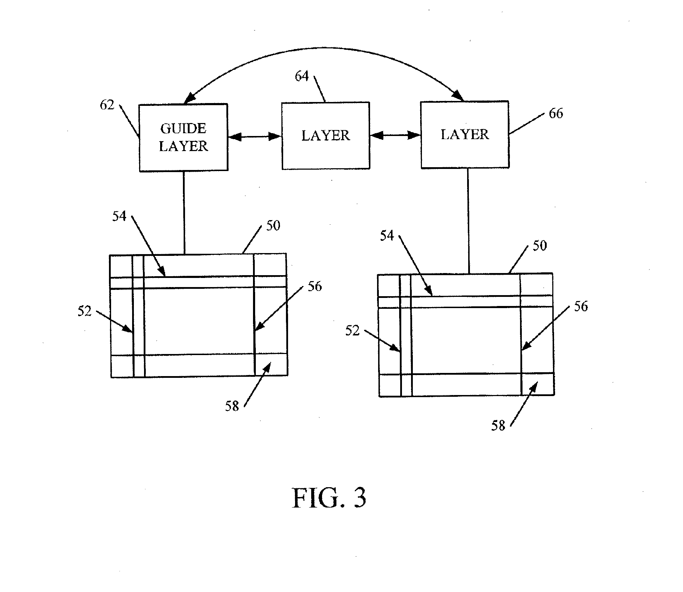

FIG. 3 shows one embodiment of canvases in the application shown in FIG. 1 in which canvases are arranged in a plurality of different layers.

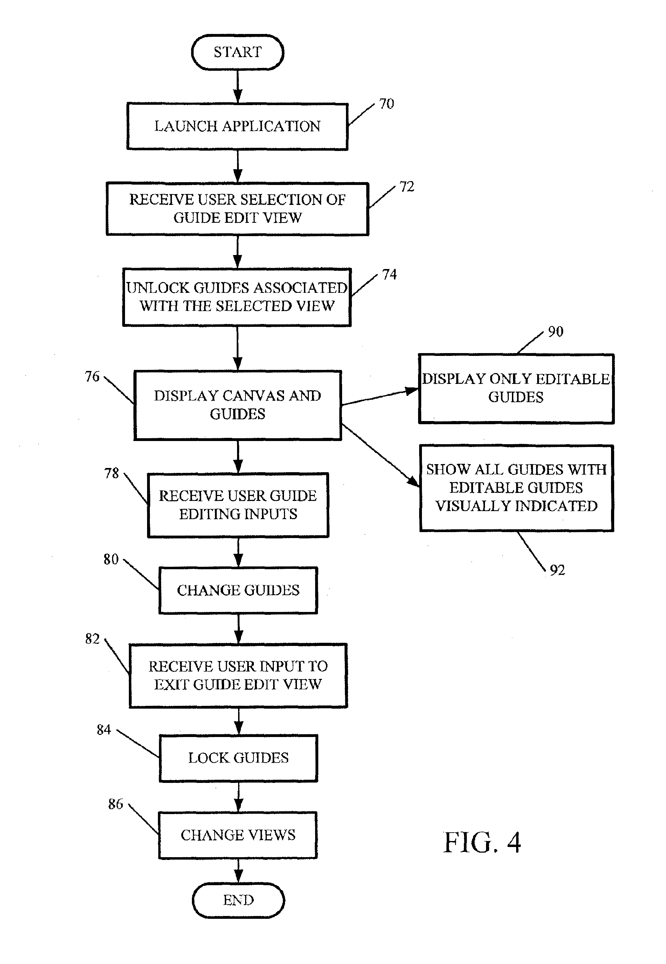

FIG. 4 is a flow diagram illustrating one embodiment of the operation of the system shown in FIG. 1 in changing guides.

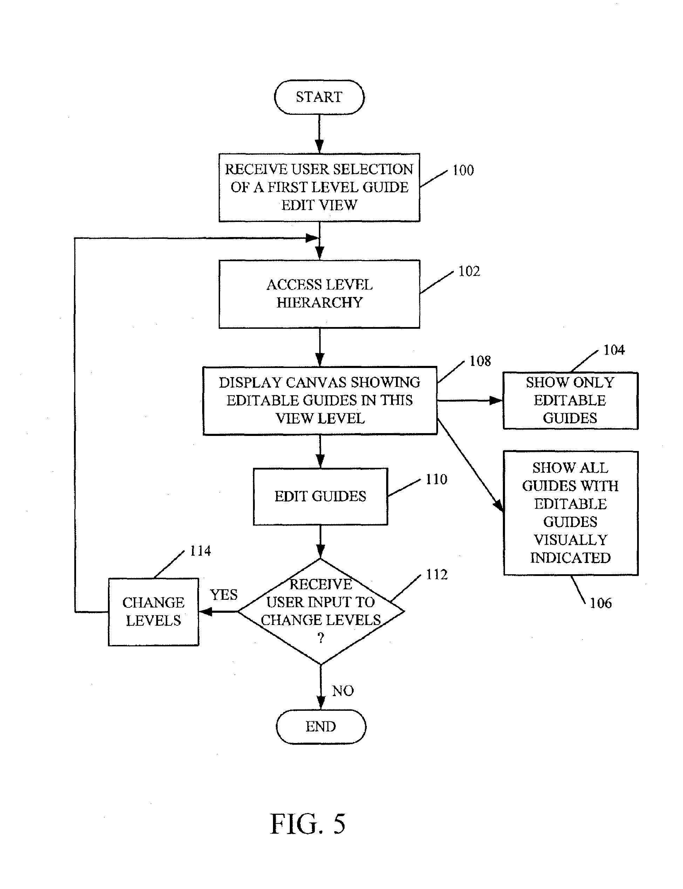

FIG. 5 is a flow diagram illustrating one embodiment of the operation of the system shown in FIG. 1 in changing guides where multiple guide edit levels are used.

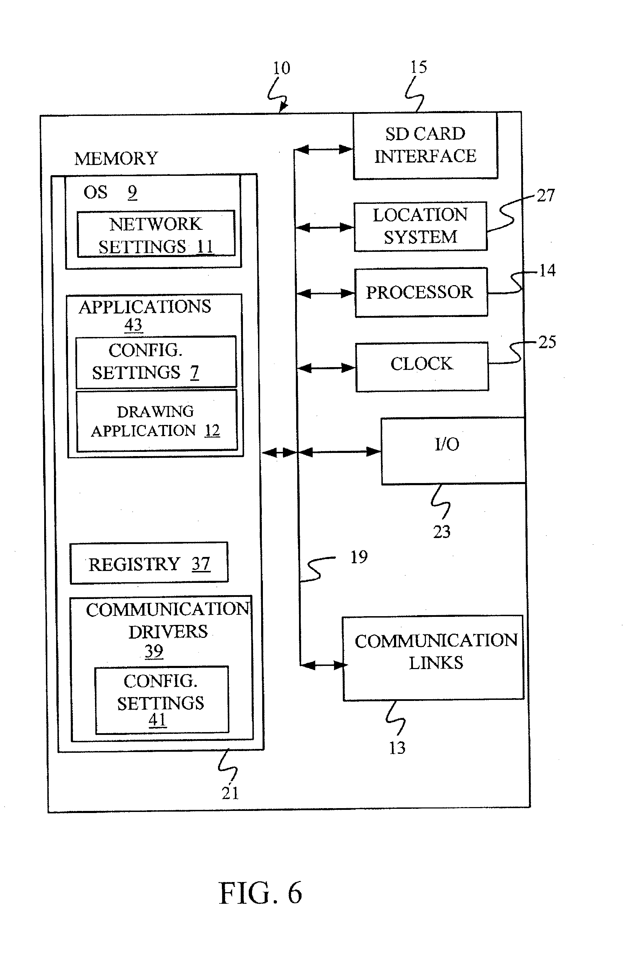

FIGS. 6-8 show embodiments of devices.

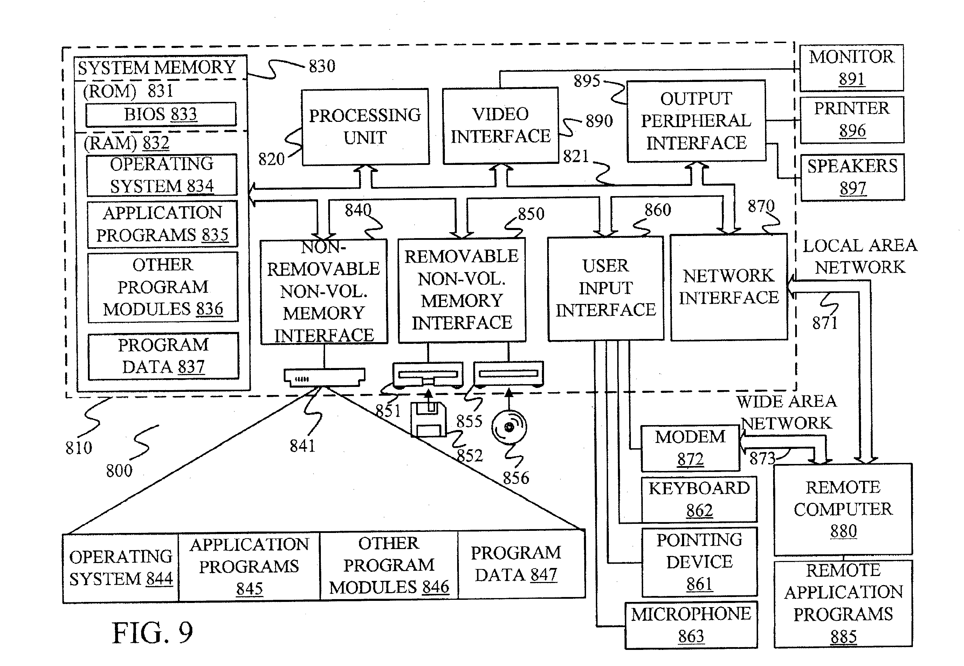

FIG. 9 shows an embodiment of a computing environment.

### DETAILED DESCRIPTION

FIG. 1 is a block diagram of one embodiment of a device 10 having a computer implemented drawing program or drawing application 12. Device 10 also includes a processor 14, memory 16, user interface component 18 and user interface display 20. The application 12 shown in FIG. 1 includes a view change component 22 along with a guide change component 24. In one embodiment, drawing application 12 is a computer implemented program that allows a user to create or import or otherwise generate visual objects for display on the screen. The objects can then be moved around on the user interface display screen by the user interacting with the graphical user interface generated on the screen. For instance, where the objects are geometric shapes, the user can illustratively select one of those shapes and move it around on the screen using various user interface mechanisms. In one illustrative embodiment, the user simply clicks on an object and drags it to a desired location on a drawing canvas portion of the screen.

In the embodiment shown in FIG. 1, device 10 also includes user interface component 18 which illustratively generates the appropriate user interface displays on user interface display 20. User interface display 20 may illustratively include a display screen for displaying the user interfaces generated by component 18. A wide variety of different types of user interface displays can be used to implement component 18 and display 20, and a number of those are described below with reference to FIGS. 6-9.

Memory 16 is illustratively accessible by processor 14 and can store drawing application 12, along with other items to be stored in memory. Various embodiments of memory 16 are also described below with respect to FIGS. 6-9.

In one embodiment, drawing application 12 provides mechanisms which allow designers or users of application 12 to align objects on the display screen. Those mechanisms will be referred to herein as "guides". By way of example, application 12 illustratively includes guide change component 24 that allows a user of application 12 to change a set of vertical and horizontal guides. In one embodiment, these guides are simply rulers which can be moved along the user interface display to provide an alignment reference, along which objects can be aligned. In the embodiment where a vertical guide is provided, the user can simply select the guide (when in the guide editing view described below) and move the guide to a particular point on the display screen. The user can then align objects along that vertical guide.

Where the guide is a horizontal guide, the user can also select the guide and move it to a desired point on the display screen and the user can then use that guide to horizontally align objects on the display screen. In some current systems, drawing applications provide one view, and the user can not only move objects in that view, but also change the guides in that view. However, when the user is attempting to align an object with a guide, it can be very easy in such systems to accidently move the guide. This can lead to additional time fixing the unintentionally moved guide.

In other current systems, the guide can be locked. However, this requires the user to select a given guide, unlock it, then move it to a desired place, and then relock the guide. This is all done by requiring the user to interact with various user interface mechanisms to perform each of those steps (e.g., selecting a guide, unlocking it, moving it, and again locking it). This must be done for each of the guides that the user wishes to change. Of course, this can also be cumbersome and time consuming for the user. Alternatively, the user can perform all the user interface operations to unlock all guides at the same time, make the desired changes, and then re-lock them all. However, this can also be cumbersome because it still requires the user interface operations, and while attempting to edit a first guide, the user may accidently modify a second guide.

Thus, in accordance with one embodiment, drawing application 12 has a set of hierarchically arranged canvas views. The different levels in the hierarchy can be used to distinguish between whether guides are locked (where they cannot be edited), or unlocked (where they can be edited by the user in the current view).

FIG. 2 shows that hierarchy 29 includes a master level 31, an intermediate master level 33, and a child level 35. It will, of course, be understood that a variety of different levels can be used as well, and those shown in FIG. 2 are shown for the sake of example only.

The canvases lower down in the hierarchy 29 inherit the properties of their ancestors in the levels higher up in hierarchy 29. In one embodiment, drawing application 12 allows users to view the canvases at different levels in the hierarchy. For instance, when a user is viewing canvas 34 from the child level 35, then certain properties of canvas 34 can be viewed and edited. However, when the user is viewing canvas 34 from the intermediate level 33, in hierarchy 29, then other properties of canvas 34 can be viewed and edited.

In the canvas hierarchy 29 shown in FIG. 2, each new canvas (or child canvas) 30, 32, 34, 36, and 38, starts as a child, in the dependency hierarchy 29, of a layout master canvas 42 and 44 in the intermediate level 33. In the embodiment shown in FIG. 2, the hierarchy continues in that each of the layout master canvases in the intermediate layer 33 is also the child of a master canvas 46 in master level 31. Specifically, in the embodiment shown in FIG. 2, canvas 30 is the child of layout master canvas 40, and therefore inherits the properties of canvas 40. Canvas 40, of course, inherits the properties of master canvas 46. Child canvas 32 inherits the properties of layout master canvas 42 as well as master canvas 46, and children canvases 34, 36, and 38 all inherit the properties of layout master canvas 44 which, itself, inherits the properties of master canvas 46.

By way of example, when an object is added to layout master canvas 44, all of the children canvases 34, 36 and 38 inherit, and thus include, that object as well. However, the object added at the intermediate level of layout master canvas 44 is illustratively not editable when the user is viewing a child canvas 34-38, at the child level 35 of the hierarchy 29.

For instance, FIG. 2 shows one illustrative user interface display 50 viewed from the intermediate level 33 of hierarchy 29. Display 50 shows that a pair of vertical guides 52 and a pair of horizontal guides 54 are placed on canvas 50 at the intermediate level 33. Therefore, when viewed from that level, they are editable, in that the user can simply select them through a desired user interface mechanism and move them, where desired. In one embodiment, when the user is using a point and click device, the user simply drags and drops the guides 52 and 54 to the desired locations. Of course, if the canvas 50 is being displayed on a touch sensitive screen, the user can drag and drop the guides 52 and 54, as desired, using touch gestures. Other user input mechanisms can be used as well.

FIG. 2 also shows canvas 50, when viewed from the lowest (child) layer 35 in hierarchy 29. When viewed from that level, guides 52 and 54 are also shown, as are another set of guides 56 and 58. In the embodiment shown in FIG. 2, guides 56 and 58 are placed on canvas 50 at the child level 35 in the hierarchy 29. When canvas 50 is viewed from that level, guides 52 and 54 are visibly distinguished from guides 56 and 58. This indicates that guides 52 and 54 (which were placed on canvas 50 at a different level than the one currently being viewed) are not editable, while guides 56 and 58 (which were placed on canvas 50 at the level currently being viewed) are editable.

In the embodiment shown in FIG. 2, the editable guides are shown in dashed lines while the uneditable guides are shown in solid lines. FIG. 2A shows a screenshot of one embodiment of this. Of course, the editable and uneditable guides can be visually distinguished from one another in a wide variety of different ways as well. For instance, they may be displayed in different colors, in different boldness, using different thickness, or in any other desired way.

FIG. 3 shows another embodiment in which drawing application 12 has layers, but may not have a hierarchy, such as hierarchy 29 shown in FIG. 2. In the embodiment shown in FIG. 3, layers 62, 64, and 66 respond to groupings of objects which are grouped together for purposes of subsequent manipulation. For instance, a set of objects displayed on a canvas can be grouped into a layer. Then, when a property is applied to that layer, it will be applied to all of the objects in that group.

For instance, if the group of objects in layer 64 are geometric shapes that have text written in them, then a "bolding" property can be applied to layer 64, in which case all of the lines forming all of the geometric shapes in layer 64 will appear in bold. Of course, the objects in each layer 62-66 can be manipulated in other ways as well, and bolding those objects is described for the sake of example only.

It will also be noted that, in one embodiment, one of the given layers 62-66 can be active at any given time. This can be done by selecting a layer to be active using a user interface input mechanism in drawing application 12. The particular mechanism used to select a layer to be the active layer can vary, based on application. However, when one of the layers 62-66 is active, the objects in that layer can be modified. However, when that layer is inactive, then its objects cannot be modified.

In one embodiment, layer 62 is a guide layer. Guide layer 62 thus displays guides for user manipulation, and also allows the user to add additional guides or delete guides from layer 62. Therefore, when the user makes guide layer 62 the active layer, the user can adjust all of the guides in that layer. However, when the user makes either layer 64 or layer 66 the active layer, then the user cannot adjust the guides in guide layer 62, although, in one embodiment, those guides will be displayed even if the user has made layer 64 or 66 the active layer. Therefore, when the user, for instance, has made layer 64 the active layer, the user can use the guides to align objects in layer 64 with the guide, without inadvertently changing the guide, itself. That is because in order for the user to change or edit the guide itself, the user must make guide layer 62 the active layer.

FIG. 3 shows an embodiment of canvas 50 when viewed with layer 62 as the active layer and when viewed with layer 66 as the active layer. It can be seen in FIG. 3 that when guide layer 62 is the active layer, all of the guides 52, 54, 56 and 58 are editable. This is indicated in the embodiment shown in FIG. 3 by displaying the guides as dashed lines. However, when canvas 50 is viewed with layer 66 being the active layer, then all of the guides 52-58 are uneditable. This is illustrated by displaying the guides as solid lines. Of course, as discussed above with respect to FIG. 2, the guides can be visually distinguishable from one another (when they are editable or uneditable) in other ways, such as using color, line width, bolding, etc.

FIG. 4 is a flow diagram illustrating one embodiment of the operation of system 10 shown in FIG. 1, in generating and allowing a user to edit guides. First, drawing application 12 is launched. This can be done by processor 14, in conjunction with an operating system or otherwise. Launching application 12 is indicated by block 70 in FIG. 4. Next, application 12 receives a user selection of a guide edit view. In one embodiment, application 12 uses user interface component 18 to generate a user interface display having mechanisms or elements thereon corresponding to the different views or that otherwise allow a user to change views. In one illustrative embodiment, application 12 generates the display with tabs corresponding to the different views. When the user selects one of a plurality of different tabs (such as by clicking on a tab), application 12 navigates to a given view represented by the tab. For instance, when application 12 has a hierarchy 29, and the user selects a tab corresponding to the child view 35, then application 12 presents a selected canvas 50 from the perspective of the child level 35.

On the other hand, if application 12 has layers such as those shown in FIG. 3, and the user selects guide layer 62, then application 12 presents the user interface as displaying canvas 50 when viewed from within guide layer 62. In any case, receiving the user input selection of a guide edit view is indicated by block 72 in FIG. 4.

Application 12 illustratively includes view change component 22 which controls changing the display generator by application 12 as coming from the perspective of the selected view. Thus, once the selected view has been received, application 12 unlocks the guides associated with the selected view. For instance, where application 12 has hierarchy 29, and the user has selected the child level 35 as the view, then application 12 (by way of example) unlocks guides 56 and 58 so that they can be edited by the user. On the other hand, if application 12 has layers 62-66, and the user has chosen guide layer 62 as the active layer, then application 12 unlocks all of the guides 52, 54, 56 and 58, so that the user can edit all of them. Unlocking the guides associated with the selected view is indicated by block 74 in FIG. 4.

Application 12 then causes user interface component 18 and user interface display 20 to display the canvas and guides corresponding to the selected view. This is indicated by blocks 76 in FIG. 4. Displaying the canvas and guides can be done in a wide variety of different ways. For instance, in one embodiment, only the guides that are editable from the currently selected view are displayed. This is indicated by block 90 in FIG. 4. In another embodiment, all of the guides are displayed, but those that are editable are visually distinguished from those that are not editable. This is indicated by block 92 in FIG. 4. By way of example, the editable guides may be shown in dashed lines while the uneditable guides may be shown in solid lines.

When the canvas is displayed from a guide edit view (that is when guide layer 62 is made active in FIG. 3 or when the user selects one of the levels of hierarchy 29 where guides were added to the canvas) the user can edit the associated guides. The user can do this in a wide variety of different ways. For instance, the user can use drag and drop techniques to drag the guides to desired locations. The user can do this using touch gestures, point and click devices, or other user input mechanisms. Alternatively, the user can use keypads, buttons, scroll wheels, touch pads, or any of a wide variety of other mechanisms to edit the location of guides on the selected canvas. Receiving the user guide editing inputs is indicated by block 78 in FIG. 4.

Guide change component 24 then illustratively changes the guides based on the editing inputs received through the user interface. For instance, where the user has dragged and dropped one of the guides to a desired location, guide change component 24 illustratively records the new location of the guide. This can be saved in memory 16 or it can be persisted in other ways. Changing the guides based on the editing inputs received from the user is indicated by block 80 in FIG. 4.

As long as application 12 is presenting a canvas from the perspective of a guide editing view, the user can continuously change the guides or edit their locations, as desired. At some point, after the guides are edited in a desired way, the user will input (though an appropriate user input mechanism) an input indicative of the fact that the user wishes to change views. For instance, where the user is editing the guides in the intermediate level 33 of hierarchy 29, and the user has finished editing those guides, then the user may illustratively provide an input to view change component 22 of application 12 indicating that the user wishes to move to the child level 35 of hierarchy 29 and view the canvas from that perspective. Alternatively, in the embodiment shown in FIG. 3, where the user has finished editing the guides in guide layer 62, the user will illustratively provide an input to view change component 22 indicating that the user wishes to make one of the other layers (e.g., 64 or 66) the active layer. Receiving the user input to exit the guide edit view is indicated by block 82 in FIG. 4.

When view change component 22 changes the view, then application 12 illustratively locks the guides that have just been edited, and are no longer associated with the currently-selected view. For instance, if the user is moving from intermediate level 33 to child level 35 of hierarchy 29, then application 12 illustratively locks the guides associated with intermediate level 33 and unlocks the guides (if any) associated with child level 35. Similarly, in the embodiment shown in FIG. 3, when the user is moving from guide layer 62 to layer 64 (as the active layer), then drawing application 12 illustratively locks all of the guides, because none are associated with layer 64. Locking the guides is indicated by block 84 in FIG. 4.

View change component 22 then changes the view displayed to the user to the newly selected view. This is indicated by block 86 in FIG. 4. The user can then freely move objects on the canvas, displayed from that view, without worrying that a guide may be inadvertently moved. This is because all of the guides which are not associated with the currently displayed view are locked.

FIG. 5 is a flow diagram illustrating another embodiment of the operation shown in FIG. 1 in a way that is more specifically related to application 12 having a level hierarchy such as hierarchy 29 shown in FIG. 2. In the embodiment shown in FIG. 5, view change component 22 illustratively receives user selection of a first level guide edit view. For instance, this can be an indication that the user is selecting any level in hierarchy 29 where a guide has been added to a canvas (or any level where a guide is editable). For instance, if guides 52 and 54 were added to (or are editable on) canvas 50 at intermediate level 33, then selecting the first level guide edit view can be done by viewing the canvas from the perspective of level 33. Receiving user selection of a first level guide edit view is indicated by block 100 in FIG. 5. Application 12 then accesses hierarchy 29 to identify which guides have been added to the canvas at that level. As discussed above, hierarchy 29 can be stored in memory 16 or elsewhere. Accessing the level hierarchy is indicated by block 102 in FIG. 5.

Application 12 then uses user interface component 18 and user interface display 20 to generate a display that displays the canvas showing the editable guides in the selected level. This can be done in a number of different ways. For instance, if the user has selected the intermediate level 33, then in one embodiment application 12 only displays guides 52 and 54 that are editable from that level. This is indicated by block 104 in FIG. 5. Alternatively, of course, application 12 can show all guides but visually distinguish those which are editable from those which are uneditable. For instance, if the user has instead chosen to view canvas 50 from the child level 35 in hierarchy 29, the application 12 may choose to display all guides but display guides 52 and 54 in solid lines (indicating that they are uneditable) and guides 56 and 58 in dashed lines (indicating that they are editable). Showing all the guides (with editable guides visually indicated) is indicated by block 106 in FIG. 5. In either case, displaying the canvas showing the editable guides in the selected view level is indicated by block 108 in FIG. 5.

Once the canvas and associated editable guides are displayed, the user can edit those guides. This has been described above, and is indicated by block 110 in FIG. 5. After the user has edited the guides associated with the current viewing level as desired, application 12 then receives a user input from the user indicating that the user wishes to change levels. This is indicated by block 112 in FIG. 5. When this occurs, view change component 22 again accesses hierarchy 29 and causes application 12 to generate a display of the canvas from the perspective of the newly selected level. Changing the views is indicated by block 114 in FIG. 5.

Processing then reverts to block 108 where, if there are any guides associated with the currently selected level, they are displayed in a way that indicates that they are editable. However if, at block 112, the user has not chosen to change levels yet, then the current display is continued.

FIGS. 6-8 show a number of different embodiments for client device 10. While these embodiments will be described in FIGS. 6-8, it should be noted that these are not exclusive, but are provided as illustrative and exemplary descriptions of embodiments of client device 10.

It will also be noted that as shown in FIG. 1, device 10, or various components of system 10, can reside elsewhere, other than on client device 10. For instance, it could be embodied in a cloud computing environment. Cloud computing provides computation, software, data access, and storage services that do not require end-user knowledge of the physical location or configuration of the system that delivers the services. In various embodiments, cloud computing delivers the services over a wide area network, such as the internet, using appropriate protocols. For instance, cloud computing providers deliver applications over a wide area network and they can be accessed through a web browser or any other computing component. Software or components of device 10 as well as the corresponding data, can be stored on servers at a remote location. The computing resources in a cloud computing environment can be consolidated at a remote data center location or they can be dispersed. Cloud computing infrastructures can deliver services through shared data centers, even though they appear as a single point of access for the user. Thus, the components and functions described herein can be provided from a service provider at a remote location using a cloud computing architecture. Alternatively, they can be provided from a conventional server, or they can be installed on client device 16 directly, or in other ways.

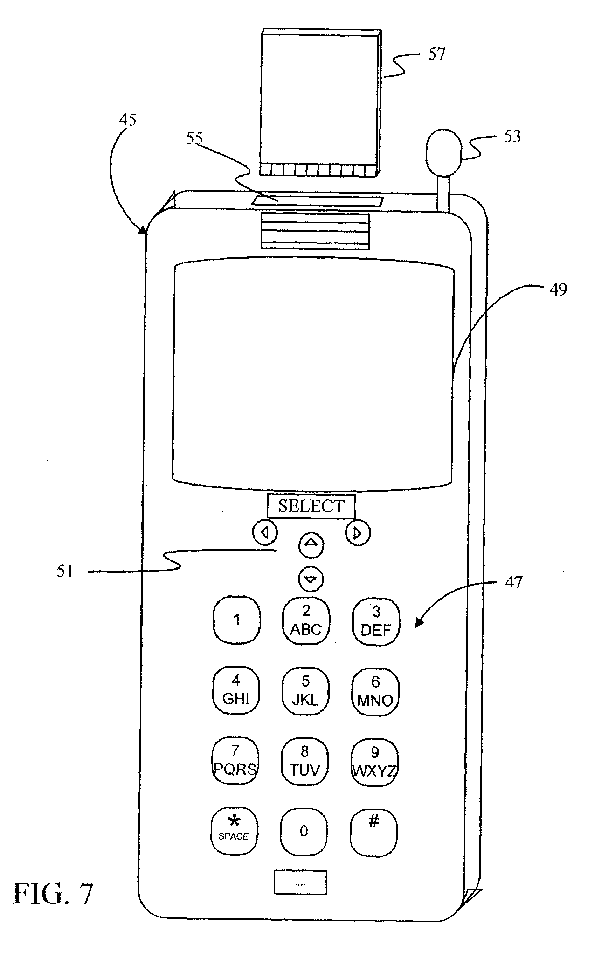

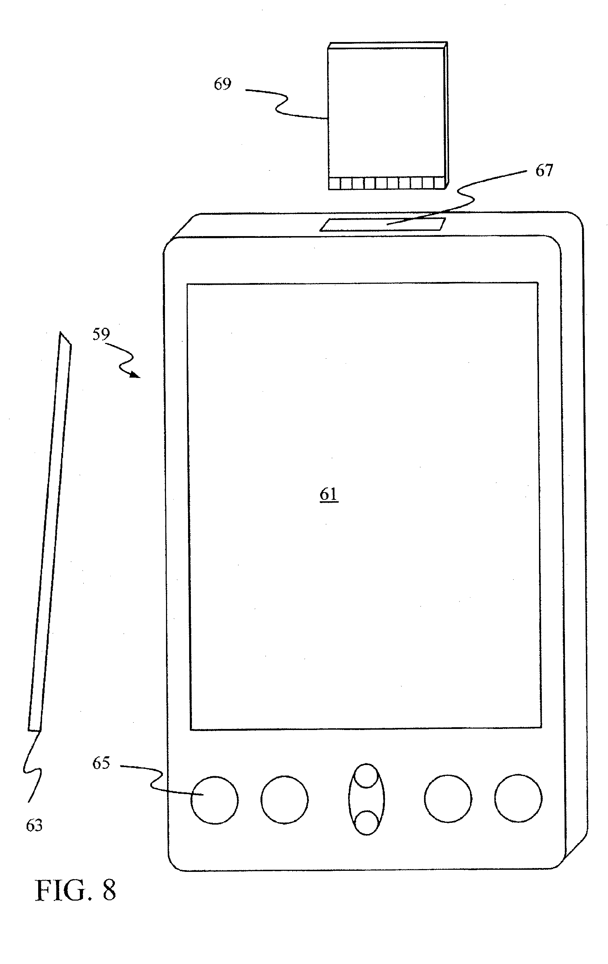

In any case, FIG. 6 is a simplified block diagram of one illustrative embodiment of a handheld or mobile computing device that can be used as device 10, in which the present system can be deployed. FIGS. 7 and 8 are examples of handheld or mobile devices.

FIG. 6 provides a general block diagram of the components of a device 10 that can run components of device 10 or that interacts with device 10, or both. In the device 10, a communications link 13 is provided that allows the handheld device to communicate with other computing devices and under some embodiments provides a channel for receiving information automatically, such as by scanning. Examples of communications link 13 include an infrared port, a serial/USB port, a cable network port such as an Ethernet port, and a wireless network port allowing communication though one or more communication protocols including General Packet Radio Service (GPRS), 1Xrtt, and Short Message Service, which are wireless services used to provide cellular access to a network, as well as 802.11 and 802.11b (Wi-Fi) protocols, and Bluetooth protocol, which provide local wireless connections to networks.

Under other embodiments, applications or systems are received on a removable Secure Digital (SD) card that is connected to a SD card interface 15. SD card interface 15 and communication links 13 communicate with a processor 14 along a bus 19 that is also connected to memory 21 and input/output (I/O) components 23, as well as clock 25 and location system 27.

I/O components 23, in one embodiment, are provided to facilitate input and output operations. I/O components 23 for various embodiments of the device 10 can include input components such as buttons, touch sensors, touch screens, proximity sensors, microphones, tilt sensors, and gravity switches and output components such as a display device, a speaker, and or a printer port. Other I/O components 23 can be used as well.

Clock 25 illustratively comprises a real time clock component that outputs a time and date. It can also, illustratively, provide timing functions for processor 14.

Location system 27 illustratively includes a component that outputs a current geographical location of device 10. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 9, network settings 11, applications 43, application configuration settings 35, registry 37, communication drivers 39, and communication configuration settings 7. Memory 21 can include all types of tangible volatile and non-volatile computer-readable memory devices. It can also include computer storage media (described below). Memory 21 stores computer readable instructions that, when executed by processor 14, cause the processor to perform computer-implemented steps or functions according to the instructions. Drawing program 12, or other items for example, can reside in memory 21. Processor 14 can be activated by other components to facilitate their functionality as well.

Examples of the network settings 7 include things such as proxy information, Internet connection information, and mappings. Application configuration settings 7 include settings that tailor the application for a specific enterprise or user. Communication configuration settings 41 provide parameters for communicating with other computers and include items such as GPRS parameters, SMS parameters, connection user names and passwords.

Applications 43 can be applications that have previously been stored on the device 10 or applications that are installed during use, although these can be part of operating system 9, or hosted external to device 10, as well.

FIGS. 7 and 8 provide examples of devices 10 that can be used, although others can be used as well. In FIG. 8, a smart phone or mobile phone 45 is provided as the device 16. Phone 45 includes a set of keypads 47 for dialing phone numbers, a display 49 capable of displaying images including application images, icons, web pages, photographs, and video, and control buttons 51 for selecting items shown on the display. The phone includes an antenna 53 for receiving cellular phone signals such as General Packet Radio Service (GPRS) and 1Xrtt, and Short Message Service (SMS) signals. In some embodiments, phone 45 also includes a Secure Digital (SD) card slot 55 that accepts a SD card 57.

The mobile device of FIG. 8 is a personal digital assistant (PDA) 59 or a multimedia player or a tablet computing device, etc. (hereinafter referred to as PDA 59). PDA 59 includes an inductive screen 61 that senses the position of a stylus 63 (or other pointers, such as a user's finger) when the stylus is positioned over the screen. This allows the user to select, highlight, and move items on the screen as well as draw and write. PDA 59 also includes a number of user input keys or buttons (such as button 65) which allow the user to scroll through menu options or other display options which are displayed on display 61, and allow the user to change applications or select user input functions, without contacting display 61. Although not shown, PDA 59 can include an internal antenna and an infrared transmitter/receiver that allow for wireless communication with other computers as well as connection ports that allow for hardware connections to other computing devices. Such hardware connections are typically made through a cradle that connects to the other computer through a serial or USB port. As such, these connections are non-network connections. In one embodiment, mobile device 59 also includes a SD card slot 67 that accepts a SD card 69.

Note that other forms of the devices 10 are possible. Examples include tablet computing devices, music or video players, and other handheld computing devices.

FIG. 9 is one embodiment of a computing environment in which device 10 (for example) can be deployed. With reference to FIG. 9, an exemplary system for implementing some embodiments includes a general-purpose computing device in the form of a computer 810. Components of computer 810 may include, but are not limited to, a processing unit 820, a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus. Memory and programs described with respect to FIG. 1 can be deployed in corresponding portions of FIG. 9.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media typically embodies computer readable instructions, data structures, program modules or other data in a transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 10 illustrates operating system 834, application programs 835, other program modules 836, and program data 837.

The computer 810 may also include other removable/non-removable volatile/nonvolatile computer storage media. By way of example only, FIG. 9 illustrates a hard disk drive 841 that reads from or writes to non-removable, nonvolatile magnetic media, a magnetic disk drive 851 that reads from or writes to a removable, nonvolatile magnetic disk 852, and an optical disk drive 855 that reads from or writes to a removable, nonvolatile optical disk 856 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and magnetic disk drive 851 and optical disk drive 855 are typically connected to the system bus 821 by a removable memory interface, such as interface 850.

The drives and their associated computer storage media discussed above and illustrated in FIG. 9, provide storage of computer readable instructions, data structures, program modules and other data for the computer 810. In FIG. 9, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies. They can also include search components 802 and 804.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures, such as a parallel port, game port or a universal serial bus (USB). A monitor 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections to one or more remote computers, such as a remote computer 880. The remote computer 880 may be a personal computer, a hand-held device, a server, a router, a network PC, a peer device or other common network node, and typically includes many or all of the elements described above relative to the computer 810. The logical connections depicted in FIG. 10 include a local area network (LAN) 871 and a wide area network (WAN) 873, but may also include other networks. Such networking environments are commonplace in offices, enterprise-wide computer networks, intranets and the Internet.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. The modem 872, which may be internal or external, may be connected to the system bus 821 via the user input interface 860, or other appropriate mechanism. In a networked environment, program modules depicted relative to the computer 810, or portions thereof, may be stored in the remote memory storage device. By way of example, and not limitation, FIG. 10 illustrates remote application programs 885 as residing on remote computer 880. It will be appreciated that the network connections shown are exemplary and other means of establishing a communications link between the computers may be used.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method of controlling alignment guides (52, 54, 56) on a drawing program, using a computer with a processor, comprising:
displaying a user interface display showing a view of a pane (50), the pane (50) having a plurality of different views, at least a first of the views comprising a guide edit view (44, 62) displaying drawing guides (52, 54) that are editable only when viewed in the guide edit view (44, 62), the user interface display having a user input mechanism that receives user drawing inputs to arrange objects on the pane;
receiving (72, 100)a view change input to change the view of the displayed pane to the guide edit view (44, 62);
displaying (76) a user interface display showing the guide edit view (44, 62) of the pane; and
receiving a guide edit input (78) moving a position on the pane of at least one of the drawing guides (52, 54) that are editable in the guide edit view (44, 62).

2. The computer-implemented method of claim 1 and further comprising:
receiving a view change input to change the view of the displayed pane to a second of the plurality of views other than the guide change view; and
displaying a user interface display showing the second view of the pane, the drawing guides being un-editable in the second view.

3. The computer-implemented method of claim 1 wherein the pane has a plurality of different guide edit views, each displaying a different corresponding set of drawing guides that are editable only from the corresponding guide edit view and wherein displaying a user interface showing the guide edit view comprises displaying a user interface showing a first of the plurality of different guide edit views of the pane.

4. The computer-implemented method of claim 3 wherein displaying a user interface showing a first of the plurality of different guide edit views of the pane, comprises:
displaying the set of drawing guides corresponding to the first guide edit view, without displaying any other set of drawing guides that are un-editable from the first guide edit view.

5. The computer-implemented method of claim 3 wherein displaying a user interface showing a first of the plurality of different guide edit views of the pane, comprises:
displaying the set of drawing guides corresponding to the first guide edit view so that it is visually contrasting the at least one additional set of the plurality of sets of drawing guides, to indicate which set of drawing guides is editable from the first guide edit view.

6. The computer-implemented method of claim 1 wherein the plurality of different views of the pane are hierarchically arranged according to a view hierarchy, views lower in the view hierarchy inheriting objects added to views higher in the view hierarchy, and wherein displaying a user interface display showing the guide edit view of the pane comprises:
displaying a view in the view hierarchy where the drawing guides were added to the pane, wherein the drawing guides are editable only from the view in the view hierarchy at which the drawing guides were added to the pane.

7. The computer-implemented method of claim 1 wherein the plurality of different views of the pane are arranged according to a flat, single level view arrangement, wherein displaying a user interface display showing the guide edit view of the pane comprises:
displaying a view in the flat, single level view arrangement where the drawing guides were added to the pane, wherein the drawing guides are editable only from the view in the flat, single level view arrangement at which the drawing guides were added to the pane.

8. The computer-implemented method of claim 1 wherein displaying a user interface showing a view of a pane comprises:
displaying a plurality of selectable user interface elements each indicative of a different one of the plurality of different views of the pane;
wherein receiving a view change input comprises receiving user selection of one of the selectable user interface elements corresponding to the guide edit view of the pane; and
wherein displaying a user interface display showing the guide edit view of the pane is performed in response to the user performing a one click selection of the selectable user interface element corresponding to the guide edit view of the pane.

9. The computer-implemented method of claim 8 and further comprising:
receiving user selection of one of the selectable user interface elements corresponding to a different view, other than the guide edit view of the pane; and
locking the drawing guides in place in response to receiving the user selection of one of the selectable user interface elements corresponding to a different view, other than the guide edit view of the pane.

10. A computer-implemented drawing system, comprising:
a plurality of different views of a pane (50), at least one of the views having a corresponding set of guides (52, 54);
a view change component (22) receiving a view selection input indicative of a selected view of the pane (50);
a user interface component (18) displaying a user interface display of the selected view of the pane (50);
a guide change component (24) receiving guide change inputs indicative of user edits to the set of guides (52, 54) and editing the set of guides (52, 54) according to the guide change inputs only when the selected view (44, 62) corresponds to the set of guides (52, 54); and
a computer processor (14) being a functional component of the drawing system (10) and activated by the view change component (22), the user interface component (18) and the guide change component (24), to facilitate receiving the view selection input, displaying the user interface display (20) and editing the set of guides (52, 54).
